# EUROPEAN PATENT APPLICATION

(11) **EP 4 489 089 A1**
(43) Date of publication of application: **08.01.2025**
(21) Application number: 24176843.1
(22) Date of filing: 20.05.2024
(51) Int. Cl.: H01M 4/04, B65C 1/02, B65C 1/04

(54) **ELECTRODE PLATE OF RECHARGEABLE BATTERY, PRESSING DEVICE THEREFOR, AND PRESSING METHOD THEREFOR**

(30) Priority: 04.07.2023 KR 20230086568
(71) Applicant: Samsung SDI Co., Ltd., Yongin-si, Gyeonggi-do 17084 (KR)
(72) Inventor: LEE, Junsub, 17084 Yongin-si (KR); JUN, Pilgoo, 17084 Yongin-si (KR)
(74) Representative: Marks & Clerk LLP

(57) **Abstract**

A device for pressing an electrode plate (EP) of a rechargeable battery, the device including an uncoiler (10) configured to supply a label from an inflow side of an electrode plate (EP) having a first coated portion and a second coated portion coated with an active material slurry and an uncoated portion between the first coated portion and the second coated portion, a label applicator (20) configured to apply the label to the uncoated portion, a roll press (30) configured to press the first coated portion and the second coated portion of the electrode plate (EP) in which the label is applied to the uncoated portion together with the label and a label separator (40) configured to separate the pressed label from the uncoated portion of the pressed electrode plate (EP).

## Description

### BACKGROUND

### 1. Field

The present invention relates to an electrode plate of a rechargeable battery, a pressing device thereof, and a pressing method therefor, and more particularly to an electrode plate of a rechargeable battery, a pressing device thereof, and a pressing method therefor which minimize stress between a coated portion and an uncoated portion.

### 2. Description of the Related Art

A rechargeable battery is a battery that, unlike a primary battery, is charged and discharged repeatedly. Miniaturized rechargeable batteries are used in small, portable electronic devices, such as cell phones, laptop computers, and camcorders.

The rechargeable battery includes an electrode assembly that acts to charge and discharge, and a case or pouch that contains the electrode assembly. The electrode assembly may be formed by disposing a positive electrode plate and a negative electrode plate on opposite sides of a separator, and winding the positive electrode plate, the separator, and the negative electrode plate into a form of a jelly roll.

The roll press facility for producing an electrode plate rolls the electrode plate to a predetermined thickness to improve the density of the coated portion after slurry coating during the pole plate process in battery production. However, the shape of the coated portion may lead to defects in the uncoated portion, making it difficult to apply the roll press method.

### SUMMARY

According to an aspect of the present invention there is provided a device for pressing an electrode plate of a rechargeable battery. The device includes an uncoiler configured to supply a label from an inflow side of an electrode plate having a first coated portion and a second coated portion coated with an active material slurry and an uncoated portion between the first coated portion and the second coated portion, a label applicator configured to apply the label to the uncoated portion, a roll press configured to press the first coated portion and the second coated portion of the electrode plate in which the label is applied to the uncoated portion together with the label and a label separator configured to separate the pressed label from the uncoated portion of the pressed electrode plate.

The device may further include a rewinder configured to rewind the label separated from the uncoated portion by the label separator.

The device may further include an align vision provided between the label applicator and the roll press and configured to detect alignment of the label attached to the uncoated portion with the uncoated portion.

The label applicator may apply the label to the uncoated portion while maintaining a first gap set between the first coated portion and one end of the label, and a second gap set between the second coated portion and the other end of the label, provided in opposite sides in a width direction of the electrode plate.

The label applicator may be formed by a roller and the label may be transferred to a surface of the roller and then applied to the uncoated portion.

If the first coated portion and the second coated portion are formed in a stripe type along a length direction of the electrode plate on the electrode plate with the uncoated portion interposed therebetween, the label applicator may apply the label in a stripe type along the length direction of the electrode plate.

The label separator may continuously remove the label along the length direction of the electrode plate.

The first coated portion and the second coated portion may be formed in a pattern type extending along a width direction of the electrode plate and spaced apart along a length direction on the electrode plate, with the uncoated portion interposed therebetween, and the label applicator may apply a plurality of unit patterns of the label, which extend along a width direction of the electrode plate and are spaced apart along a length direction, to correspond to the pattern of the uncoated portion.

The label separator may remove the label intermittently along the width direction of the electrode plate.

According to a further aspect of the present invention there is provided a method of pressing an electrode plate of a rechargeable battery. The method includes a first operation of continuously supplying an electrode plate having a first coated portion and a second coated portion coated with an active material slurry and an uncoated portion between the first coated portion and the second coated portion and supplying a label, a second operation of applying the supplied label to the uncoated portion, a third operation of pressing the first coated portion and the second coated portion of the electrode plate in which the label is applied to the uncoated portion together with the label and a fourth operation of removing the label from the uncoated portion of the pressed electrode plate.

The method may further include a fifth operation of rewinding the separated label.

The second operation may further include an alignment detection operation of detecting alignment of the label attached to the uncoated portion with the uncoated portion.

The second operation may include applying the label to the uncoated portion while maintaining a first gap set between the first coated portion and one end of the label and a second gap set between the second coated portion and the other end of the label, provided in opposite sides in a width direction of the electrode plate.

If the first coated portion and the second coated portion are formed in a stripe type along a length direction of the electrode plate on the electrode plate with the uncoated portion interposed therebetween, the second operation includes applying the label in a stripe type along the length direction of the electrode plate.

The fourth operation may include continuously removing the label along the length direction of the electrode plate.

If the first coated portion and the second coated portion are formed in a pattern type along a width direction of the electrode plate on the electrode plate, with the uncoated portion interposed therebetween, the second operation includes applying the label in a pattern type along the width direction of the electrode plate.

The fourth operation may include removing the label intermittently along the width direction of the electrode plate.

According to a further aspect of the present invention there is provided an electrode plate of a rechargeable battery. The electrode plate includes a first coated portion and a second coated portion in which an electrode plate is coated with an active material slurry and an uncoated portion set by an exposure of the electrode plate between the first coated portion and the second coated portion, wherein the uncoated portion is removed after pressing the first coated portion and the second coated portion with the label attached to form wrinkles, and wherein the wrinkles are formed on each of opposite sides of a width of the uncoated portion set in the width direction of the electrode plate within a maximum range of 0.05 W.

If the width of the uncoated portion is 60 mm, the wrinkles may be formed within a maximum range of 3 mm on each of the opposite sides in the width direction.

A maximum of three wrinkles may be formed within a unit area of 10* 10 mm2 set in the width direction and the length direction that intersect each other on the opposite sides in the width direction.

The wrinkles may be formed within the unit area with a maximum length of 10 mm.

The first coated portion, the uncoated portion and the second coated portion may be formed in a stripe type or a pattern type.

In some embodiments, a label is applied to the uncoated portion between the first coated portion and the second coated portion and the first coated portion, the second coated portion, and the label are pressed together, and then the label is removed to minimize an elongation difference between the first and second coated portions and the uncoated portion, thereby minimizing generation of wrinkles in the uncoated portion of the electrode plate. Therefore, a quality of an electrode plate of a rechargeable battery may be improved.

At least some of the above and other features of the invention are set out in the claims.

### BRIEF DESCRIPTION OF THE DRAWINGS

Features will become apparent to those of skill in the art by describing in detail various embodiments with reference to the attached drawings in which:
FIG. 1 is a block diagram of a device for pressing an electrode plate of a rechargeable battery according to one or more embodiments;
FIG. 2 is a partial plan view of a striped type of electrode plate before pressing according to one or more embodiments;
FIG. 3 is a partial plan view of the electrode plate of FIG. 2 with a label attached according to one or more embodiments;
FIG. 4 is a partial plan view of the electrode plate showing a gap between the label attached to the uncoated portion and the coated portion according to one or more embodiments;
FIG. 5 is a top plan view of a roller-type label applicator applied to the electrode plate of FIG. 2 according to one or more embodiments;
FIG. 6 is a partial plan view of a pattern-type electrode plate before pressing according to one or more embodiments;
FIG. 7 is a top plan view of a roller type label applicator applied to the electrode plate of FIG. 6 according to one or more embodiments;
FIG. 8 is a partial plan view of the electrode plate of FIG. 6 with a label applied by the label applicator of FIG. 7 according to one or more embodiments;
FIG. 9 is a flowchart of a method of pressing an electrode plate of a rechargeable battery according to one or more embodiments;
FIG. 10 is an image illustrating the state of wrinkle generation in an uncoated portion of a stripe type electrode plate according to the related art; and
FIG. 11 is an image illustrating the state of wrinkle generation in the uncoated portion of the stripe type electrode plate according to one or more embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those of ordinary skill in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

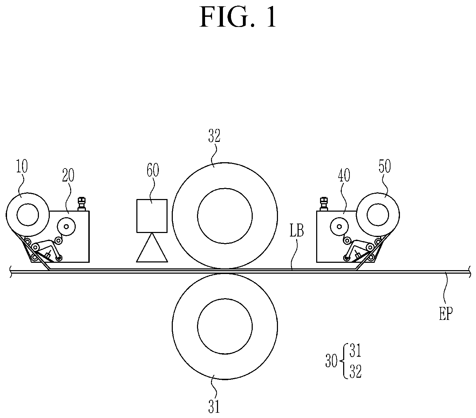

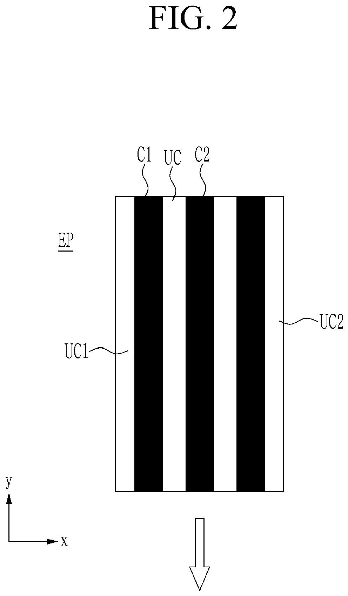

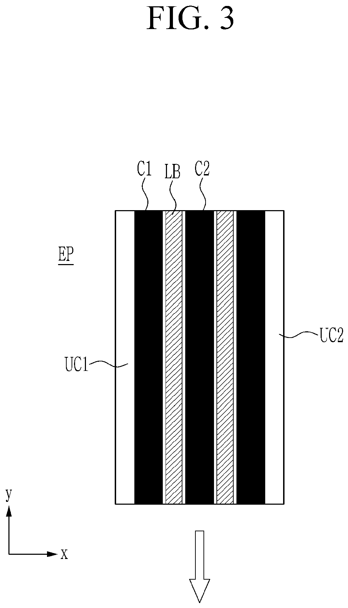

FIG. 1 is a block diagram of a device for pressing an electrode plate of a rechargeable battery according to one or more embodiments, FIG. 2 is a partial plan view of a striped type of electrode plate before pressing according to one or more embodiments, and FIG. 3 is a partial plan view of the electrode plate of FIG. 2 with a label attached according to one or more embodiments.

Referring to FIGS. 1 to 3, a device for pressing an electrode plate for a rechargeable battery may include an uncoiler 10, a label applicator 20, a roll press 30 and a label separator 40. The device for pressing the electrode plate may further include a rewinder 50 and/or an align vision 60.

An electrode plate EP may include a first coated portion C1 and a second coated portion C2 coated with an active material slurry, and an uncoated portion UC. The uncoated portion UC is provided between the first coated portion C1 and the second coated portion C2 at least in a width direction (e.g., x-axis direction) of the electrode plate EP, and is elongated continuously in a length direction (e.g., y-axis direction). The uncoated portion UC may be formed by the exposure of the electrode plate EP, i.e. without it having been coated with the active material slurry.

In other words, the first coated portion C1 and the second coated portion C2 may be elongated continuously in the length direction (e.g., y-axis direction) with the uncoated portion UC interposed therebetween in the width direction (e.g., x-axis direction). The first coated portion C1, the uncoated portion UC, and the second coated portion C2 may be formed on one or opposite sides of the electrode plate EP in a stripe type.

The electrode plate EP having the first coated portion C1, the uncoated portion UC, and the second coated portion C2 is the minimum range to which the present embodiment is applicable. In the present embodiment shown in Figure 2, the electrode plate EP has three coated portions and two uncoated portions. There is an uncoated portion between each of the two neighboring coated portions. The electrode plate EP further has two outermost uncoated portions UC1 and UC2 that are elongated in the length direction (e.g., y-axis direction) at opposite ends of the electrode plate in the width direction (e.g., x-axis direction).

The electrode plate EP may be provided with the first coated portion C1 and the second coated portion C2 that are separated from each other by slitting in the uncoated portion UC after being pressurized. In this way, the productivity of the electrode plate EP used in the rechargeable battery may be greatly improved by having a plurality of first coated portions C1 and second coated portions C2 on one electrode plate EP and slitting the first coated portions C1 and the second coated portions C2 in the uncoated portion UC. The electrode plate EP may be fed to the device for pressing the electrode plate of this embodiment and is discharged after pressing the first coated portion C1 and the second coated portion C2 by the roll press 30.

The uncoiler 10 may supply a label LB to the electrode plate EP supplied for pressing the first coated portion C1 and the second coated portion C2. That is, the uncoiler 10 may unwind the label LB in a wound state and may supply the label LB to the uncoated portion UC of the supplied electrode plate EP. In some embodiments, the uncoiler 10 may be configured to supply the label LB from the inlet side of the electrode plate EP corresponding to the uncoiler UC. In the present embodiment, the uncoiler 10 may be configured to supply the labels LB to the two uncoated portions UC.

The label applicator 20 may be configured to apply labels LB supplied by the uncoiler 10 to the uncoated portion UC. In the present embodiment, the label applicator 20 is configured to apply the labels LB supplied by the uncoiler 10 in two rows to the uncoated portions UC. The label applicator 20 applies the labels LB in a stripe type along the longitudinal or length direction (e.g., y-axis direction) of the electrode plate EP.

Although not illustrated, referring to FIGS. 1 to 3, the uncoiler 10 may be configured to also supply the labels LB to the outermost uncoated portions UC1 and UC2, and the label applicator 20 may be configured to further apply the labels LB to the outermost uncoated portions UC1 and UC2.

The electrode plate EP via the uncoiler 10 and the label applicator 20 may maintain the state in which the label LB is attached between the pressed first coated portion C1 and second coated portion C2, as illustrated in FIG. 3. The label LB may be pressed together with the first coated portion C1 and the second coated portion C2 via the roll press 30. In this state, the electrode plate EP may be introduced into the roll press 30.

The roll press 30 may include a lower support roll 31 and an upper pressing roll 32. The first coated portion C1 and the second coated portion C2 of the electrode plate EP may be pressurized while passing between the lower support roll 31 and the upper pressing roll 32, so that the electrode plate EP has a density that may enhance the performance of a battery. In addition, the label LB attached between the first coated portion C1 and the second coated portion C2 may be pressurized while passing between the support roll 31 and the pressing roll 32.

The label LB may be pressed and supported by the support roll 31 and the pressing roll 32 in the width direction (e.g., x-axis direction) between the first coated portion C1 and the second coated portion C2, and does not interfere with the pressing of the first coated portion C1 and the second coated portion C2. Therefore, the label LB may prevent the pressing stress from being concentrated at the ends of the first coated portion C1 and the second coated portion C2.

In other words, the label LB may distribute the pressing stress that may otherwise be concentrated at the ends of the first coated portion C1 and the second coated portion C2 to the uncoated portion UC. Therefore, cracking of the first coated portion C1 and the second coated portion C2 and breakage of the active material may be prevented at the ends of the first coated portion C1 and the second coated portion C2.

In addition, since the label LB distributes the roll force generated during rolling by the roll press 30 evenly to the first coated portion C1, the second coated portion C2, and the uncoated portion UC, the stress generated between the first coated portion C1, the second coated portion C2, and the uncoated portion UC may be minimized, thereby minimizing the generation of wrinkles in the uncoated portion UC.

The label LB may additionally be used in the high-frequency induction heating annealing (IHA) process to overcome the difference in elongation of the uncoated portion UC compared to the first coated portion C1 and the second coated portion C2. In other words, the label LB is attached to the uncoated portion UC to maintain the same elongation as the first coated portion C1 and the second coated portion C2 during rolling. Therefore, wrinkles are significantly reduced or prevented in the uncoated portion UC.

The label separator 40 may separate the pressed label LB in the uncoated portion UC of the pressed electrode plate EP from the uncoated portion UC. The label separator 40 may be provided at the exit side of the roll press 30 to separate the label LB used for pressing the first coated portion C1 and the second coated portion C2 from the uncoated portion UC. The label separator 40 may separate the labels LB applied in a stripe type continuously along the length direction (e.g., y-axis direction) of the electrode plate EP.

The rewinder 50 may rewind the labels LB that have been separated from the uncoated portion UC by the label separator 40. The rewinder 50 facilitates processing of the labels LB that are supplied in the form of the stripe and then separated. Therefore, the labels LB are preferably to be made of a material that is heat resistant to withstand the roll press 30, separated by the label separator 40, and rewound in the rewinder 50. In an example embodiment, the material of the label LB may have a heat resistance that may be used at about 100 to 120°C, and may have a thickness, stiffness, and adhesion similar to those of the first coated portion C1 and the second coated portion C2.

The align vision 60 may be provided between the label applicator 20 and the roll press 30 to adjust the alignment of the label LB to the uncoated portion UC if applying the label LB prior to rolling the electrode plate EP. The uncoiler 10 and the label applicator 20 minimize misalignment scattering through correction by the align vision 60.

To this end, the align vision 60 may detect the alignment of the label LB attached to the uncoated portion UC with the uncoated portion UC. The detection signal from the align vision 60 may be applied to the uncoiler 10 and the label applicator 20. Thus, the uncoiler 10 and the label applicator 20 may correct the supply position of the label LB for the uncoated portion UC, and thereby attach the label LB to the corrected position.

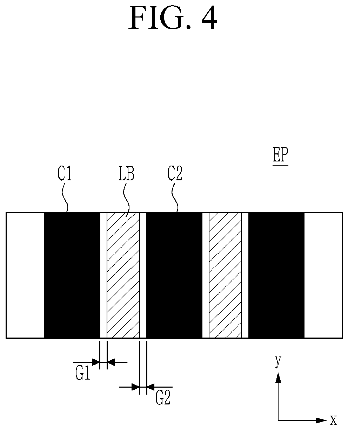

FIG. 4 is a partial plan view of the electrode plate of FIG. 3 showing a gap between the label attached to the uncoated portion and the coated portion according to one or more embodiments. Referring to FIG. 4, the label applicator 20 may apply the label LB to the uncoated portion UC while maintaining a first gap G1 and a second gap G2.

The first gap G1 may be set between the first coated portion C1 and one end of the label LB provided on opposite sides in the width direction (e.g., x-axis direction) of the electrode plate EP. The second gap G2 may be set between the second coated portion C2 and the other end of the label LB.

The align vision 60 may detect the first and second gaps G1, G2 that are set on opposite sides of the label LB if the label LB is applied. If the detection signal of the align vision 60 for the first and second gaps G1 and G2 exceeds the error range, the uncoiler 10 and the label applicator 20 may correct the supply position of the label LB for the uncoated portion UC and apply the label LB to the corrected position.

Various embodiments will be described below. Compared to the first embodiment and the embodiments described above, descriptions of configurations that are identical to each other will be omitted and descriptions of configurations that are different from each other will be described.

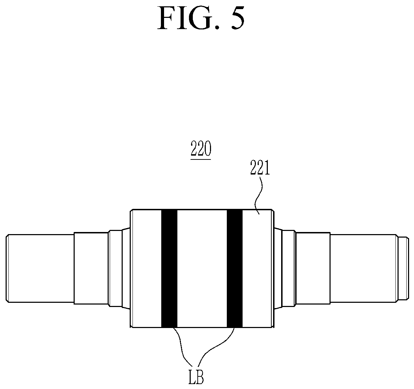

FIG. 5 is a top plan view of a roller-type label applicator applied to the electrode plate of FIG. 2 according to one or more embodiments. Referring to FIG. 5, in one example, the label applicator 220 may be formed as a roller type. That is, the label applicator 220 may be formed with a roller 221. The label LB supplied by the uncoiler 10 may then be transferred to the surface of the roller 221 and then applied to the uncoated portion UC of the electrode plate EP. The roller-type label applicator 220 may have a simple configuration. The label LB may be transferred to the surface of the roller 221 to correspond to the number of uncoated portions UC and the width of the uncoated portion UC, and then applied to the uncoated portion UC.

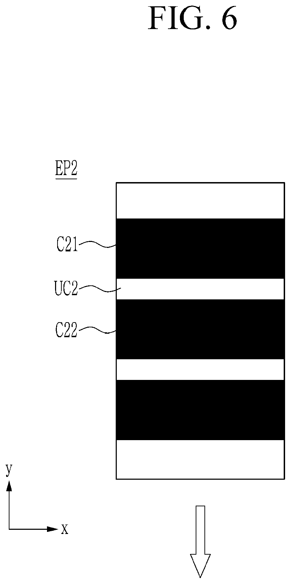

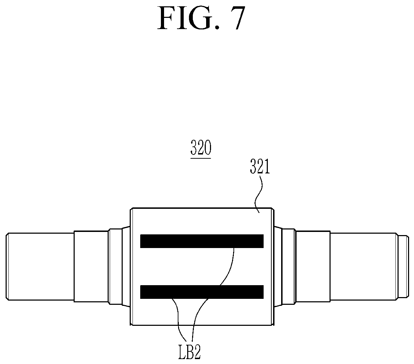

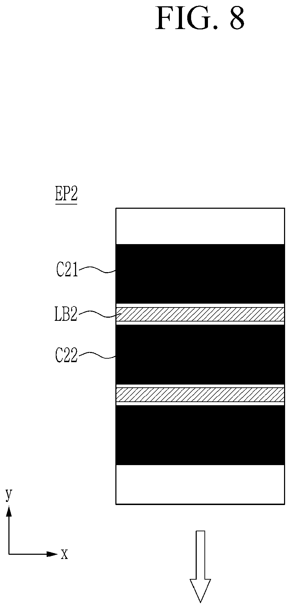

FIG. 6 is a partial plan view of a pattern-type electrode plate before pressing according to one or more embodiments, FIG. 7 is a top plan view of a roller type label applicator applied to the electrode plate of FIG. 6 according to one or more embodiments, and FIG. 8 is a partial plan view of the electrode plate of FIG. 6 with a label applied by the label applicator of FIG. 7 according to one or more embodiments.

Referring to FIGS. 6 to 8, the first coated portion C21 and the second coated portion C22 may be formed in a pattern type extending along the width direction (e.g., x-axis direction) of the electrode plate EP2 and spaced apart along the length direction (e.g., y-axis direction) on the electrode plate EP2 with the uncoated portion UC2 interposed therebetween.

In some embodiments, the label applicator 320 may be configured to attach labels LB2 disposed in plural in which unit patterns are extended along the width direction (e.g., x-axis direction) of the electrode plate EP2 and spaced apart along the length direction (e.g., y-axis direction) of the electrode plate EP2 so as to correspond to the pattern of the uncoated portion UC2. The label separator may remove the unit patterns of the label LB2 intermittently along the width direction (e.g., x-axis direction) of the electrode plate EP2.

Referring to FIG. 7, in an example embodiment, the label applicator 320 may be formed as a roller type. That is, the label applicator 320 is formed as a roller 321. In this example embodiment, the label LB2 supplied by the uncoiler 10 may be transferred to the surface of the roller 321 and then may be attached to the uncoated portion UC2 of the electrode plate EP2. The roller-type label applicator 320 may be simply configured. The label LB2 may be transferred to the surface of the roller 321 to correspond to the pattern type of the uncoated portion UC2, and then applied to the uncoated portion UC2.

Hereinafter, a method of pressing an electrode plate for a rechargeable battery will now be described, which presses an electrode plate EP with the device for pressing the electrode plate for the rechargeable battery according to one or more embodiments.

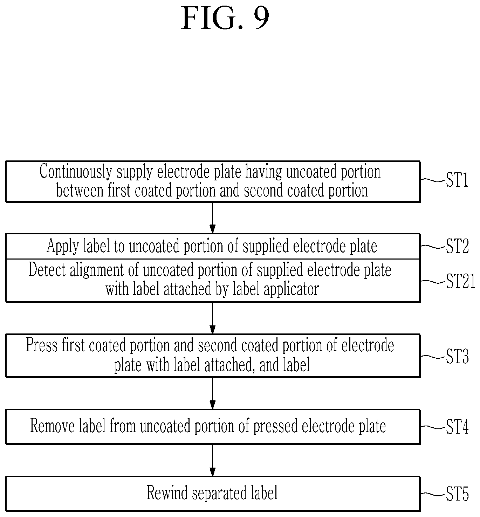

FIG. 9 is a flowchart of a method of pressing an electrode plate of a rechargeable battery according to one or more embodiments. Referring to FIGS. 2 to 4 and FIG. 9, the method of pressing the electrode plate of the rechargeable battery may include a first operation ST1, a second operation ST2, a third operation ST3, and a fourth operation ST4, and may further include a fifth operation ST5.

The first operation ST1 may continuously supply an electrode plate EP having a first coated portion C1 and a second coated portion C2 coated with an active material slurry and an uncoated portion UC between the first coated portion C1 and the second coated portion C2 and may supply a label LB.

In the second operation ST2, the label LB may be attached to the uncoated portion UC. The second operation ST2 may further include an alignment detection operation ST21 to detect an alignment of the label LB attached to the uncoated portion UC and the uncoated portion UC.

In the second operation ST2, the label LB may be attached to the uncoated portion UC while maintaining a first gap G1 and a second gap G2. The second operation ST2 may attach the label LB while maintaining the first gap G1 set between the first coated portion C1 and the label LB provided on opposite sides in the width direction (e.g., x-axis direction) of the electrode plate EP, and the second gap G2 set between the second coated portion C2 and the other end of the label LB.

If the first coated portion C1 and the second coated portion C2 are formed in a stripe type along the length direction of the electrode plate EP with the uncoated portion UC interposed therebetween, the second operation ST2 may apply the label LB in a stripe type along the length direction of the electrode plate EP.

In the third operation ST3, the first coated portion C1 and the second coated portion C2 of the electrode plate EP with the label LB attached to the uncoated portion UC may be pressed together with the label LB. The label LB may be pressed together with the first coated portion C1 and the second coated portion C2 while passing through the roll press 30. Therefore, the label LB remains attached between the pressed first coated portion C1 and second coated portion C2.

The label LB supports the support roll 31 and the pressing roll 32 between the first coated portion C1 and the second coated portion C2 in the width direction (e.g., x-axis direction) and does not interfere with the pressing of the first coated portion C1 and the second coated portion C2. The label LB distributes the pressing stress that may be concentrated at the ends of the first coated portion C1 and the second coated portion C2 to the uncoated portion UC. In this manner, crack generation and breakage of the active material at the ends of the first coated portion C1 and the second coated portion C2 may be prevented.

The fourth operation ST4 removes the label LB from the uncoated portion UC of the pressed electrode plate EP. Further, if the label LB is attached in a stripe type along the length direction of the electrode plate EP in the second operation ST2, the label LB may be continuously removed along the length direction of the electrode plate (EP) in the fourth operation ST4.

Referring to FIGS. 6 to 8, if a plurality of labels LB2 are disposed in unit patterns which are extended along the width direction (e.g., x-axis direction) of the electrode plate EP2 and spaced apart along the length direction (e.g., y-axis direction) of the electrode plate EP2, they may be disposed so as to correspond to the pattern of the uncoated portion UC2 in the second operation ST2. The unit patterns of the label LB2 may be intermittently removed along the width direction (e.g., x-axis direction) of the electrode plate EP2 in the fourth operation ST4.

Referring again to FIG. 9, in the fifth operation ST5, the separated label LB may be rewound. Further, in the fifth operation ST5, the electrode plate EP with the first coated portion C1 and the second coated portion C2 pressed with the uncoated portion UC interposed therebetween may be obtained.

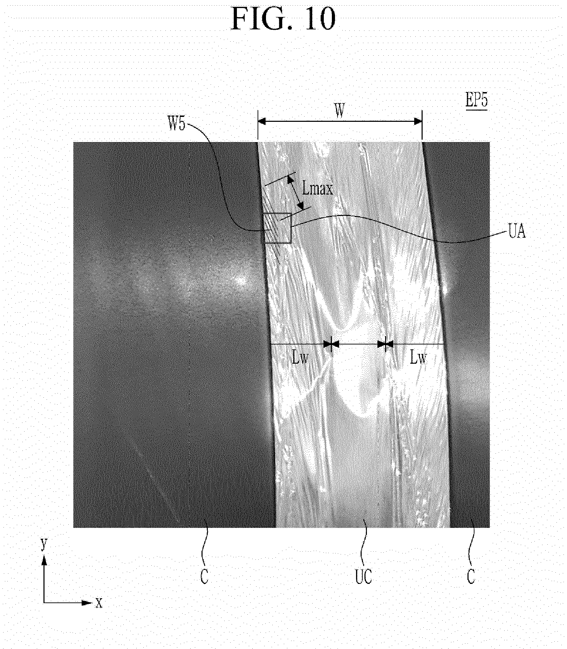

FIG. 10 is an image illustrating the state of wrinkle generation in an uncoated portion of a stripe type electrode plate according to the related art. Referring to FIG. 10, the electrode plate EP5 in the related art is pressed without application of a label to the uncoated portion UC and has long and numerous wrinkles W5 on the uncoated portion UC adjacent to the coated portion C.

The wrinkles W5 are set within a maximum formation range Lw of 0.3 W on each of the opposite sides of the width W of the uncoated portion UC set in the width direction (e.g., x-axis direction) of the electrode plate EP5. In an example embodiment, if the width W of the uncoated portion UC is 60 mm, the wrinkles W5 may be formed within 15 mm of the maximum formation range (Lw=W/3) on opposite sides in the width direction.

The wrinkles W5 may be formed no more than 5 or 6 times within a 10*10mm² unit area UA set in the width direction (e.g., x-axis direction) and the length direction (e.g., y-axis direction) that intersect each other on opposite sides in the width direction. The wrinkles W5 may protrude outwardly from the unit area UA and may be formed with a maximum length Lmax of 15 mm.

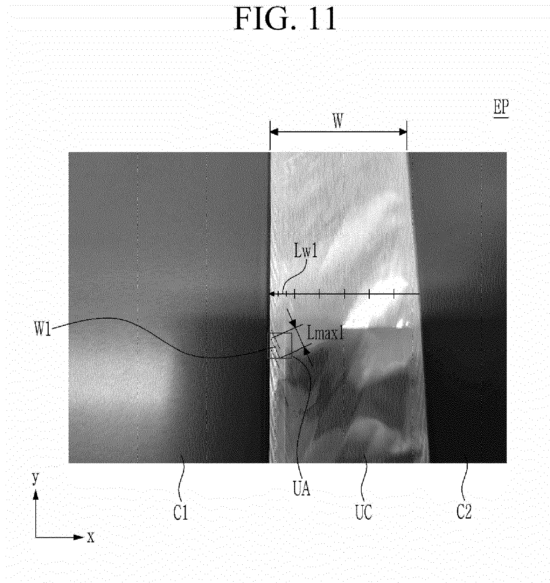

FIG. 11 is an image illustrating the state of wrinkle generation in the uncoated portion of the stripe type electrode plate according to one or more embodiments of the present disclosure. Referring to FIG. 11, the electrode plate EP produced by the pressing apparatus and pressing method of the embodiments has shorter and fewer wrinkles W1 on the uncoated portions UC adjacent to the first and second coated portions C1 and C2, compared to the electrode plate EP in the related art (FIG. 10).

The electrode plate EP produced by the pressing apparatus and pressing method of the embodiment may have a first coated portion C1, a second coated portion C2 and an uncoated portion UC. The uncoated portion UC may include wrinkle W1 generated by pressing and then removing the first coated portion C1 and the second coated portion C2 with a label LB attached.

The wrinkles W1 may be set within a maximum formation range Lw1 of 0.05 W on each of opposite sides of the width W of the uncoated portion UC set in the width direction (e.g., x-axis direction) of the electrode plate EP. The maximum range Lw1 of the wrinkles W1 of 0.05 W is smaller than the maximum range Lw of the winkles W5 of 0.3 W in the related art.

If the width W of the uncoated portion UC is, for example, 60 mm, the wrinkles W1 may be formed within 3 mm of the maximum formation range (Lw1=W/20) on each of the opposite sides in the width direction (e.g., x-axis direction). The maximum range Lw1 of the wrinkles W1, W/20, is smaller than the maximum range Lw of the wrinkles W5, W/30, in the related art.

A maximum of three wrinkles W1 may be formed within a unit area UA of 10*10 mm² set in the width direction (e.g., x-axis direction) and the length direction (e.g., y-axis direction) that intersect each other on opposite sides of the width direction. A maximum of three wrinkles W1 within the unit area UA is less than the 5 or 6 wrinkles W5 within the unit area (UA) of the related art.

The wrinkles W1 may be formed with a maximum length Lmax1 of 10 mm within the unit area UA. The maximum length Lmax1 of the wrinkles W1 of 10 mm is shorter than the maximum length Lmax of the wrinkles W5 of 15 mm in the related art.

According to the present embodiment, the elongation difference between the first and second coated portions C1 and C2, and between them and the uncoated portion therebetween, is reduced by applying the label LB to the uncoated portion UC and removing the label LB, thereby minimizing the generation of the wrinkles W1 in the uncoated portion UC. Thus, the quality of the electrode plate EP of the rechargeable battery may be improved.

The first coated portion C1, the uncoated portion UC and the second coated portion C2 may be formed in a stripe type (longitudinal) or a pattern type (transverse).

Due to the stripe shape of the coated portion on the electrode plate, there is a difference in the rolling elongation between an active material coated portion and an uncoated portion, which are continuously coated along the traveling direction of the electrode plate. Due to the difference in elongation, wrinkles occur on the uncoated portion adjacent to the coated portion, and the wrinkles cause the uncoated portion to break or experience the traveling defect.

This traveling defect makes it difficult to apply the roll press method to improve the density of the coated portion. Wrinkles in the uncoated portion cause quality degradation in the electrode plate. Thus, it is desirable to overcome the difference in elongation between the coated portion and the uncoated portion.

The present disclosure provides a device for pressing an electrode plate of a rechargeable battery that minimizes an elongation difference between a coated portion and an uncoated portion to minimize the generation of wrinkles in the uncoated portion.

The present disclosure also provides a method of pressing an electrode plate of a rechargeable battery that minimizes an elongation difference between a coated portion and an uncoated portion to minimize the generation of wrinkles in the uncoated portion.

The present disclosure further provides a device for pressing an electrode plate of the rechargeable battery, and an electrode plate of a rechargeable battery produced by a pressing method.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### <Description of Reference Numerals>

| | | | |
|---|---|---|---|
| 10: | Uncoiler | 20: | Label applicator |
| 30: | Roll press | 31: | Support roll |
| 32: | Pressing roll | 40: | Label separator |
| 50: | Rewinder | 60: | Align vision |
| 220: | Label applicator | 221: | Roller |
| 320: | Label applicator | 321: | Roller |
| C: | Coated portion | C1: | First coated portion |
| C2: | Second coated portion | C21: | First coated portion |
| C22: | Second coated portion | EP: | Electrode plate |
| EP2: | Electrode plate | EP5: | Electrode plate |
| G1: | First gap | G2: | Second gap |
| LB: | Label | LB2: | Label |
| Lmax: | Length | Lw: | Range |
| UA: | Unit area | UC: | Uncoated portion |
| UC1, UC2: | Outermost uncoated portion | UC2: | Uncoated portion |
| W: | Width | W1, W5: | Wrinkles |

## Claims

1. A device for pressing an electrode plate of a rechargeable battery, the device comprising:
an uncoiler configured to supply a label from an inflow side of an electrode plate having a first coated portion and a second coated portion coated with an active material slurry and an uncoated portion between the first coated portion and the second coated portion;
a label applicator configured to apply the label to the uncoated portion;
a roll press configured to press the first coated portion and the second coated portion of the electrode plate in which the label is applied to the uncoated portion together with the label; and
a label separator configured to separate the pressed label from the uncoated portion of the pressed electrode plate.

2. The device as claimed in claim 1, further comprising a rewinder configured to rewind the label separated from the uncoated portion by the label separator.

3. The device as claimed in claim 1 or claim 2, further comprising an align vision provided between the label applicator and the roll press configured to detect alignment of the label attached to the uncoated portion with the uncoated portion.

4. The device as claimed in any one of the preceding claims, wherein the label applicator applies the label to the uncoated portion while maintaining a first gap set between the first coated portion and one end of the label, and a second gap set between the second coated portion and the other end of the label, provided in opposite sides in a width direction of the electrode plate.

5. The device as claimed in any one of the preceding claims, wherein:
the label applicator is formed by a roller, and
the label is transferred to a surface of the roller and then applied to the uncoated portion.

6. The device as claimed in any one of the preceding claims, wherein:
the first coated portion and the second coated portion are formed in a stripe type along a length direction of the electrode plate on the electrode plate with the uncoated portion interposed therebetween, and
the label applicator applies the label in a stripe type along the length direction of the electrode plate, and optionally wherein the label separator continuously removes the label along the length direction of the electrode plate.

7. The device as claimed in any one of claims 1 to 5, wherein:
the first coated portion and the second coated portion are formed in a pattern type extending along a width direction of the electrode plate and spaced apart along a length direction on the electrode plate, with the uncoated portion interposed therebetween, and
the label applicator applies a plurality of unit patterns of the label, which extend along a width direction of the electrode plate and are spaced apart along a length direction, to correspond to the pattern of the uncoated portion, and optionally wherein the label separator removes the label intermittently along the width direction of the electrode plate.

8. A method of pressing an electrode plate of a rechargeable battery, the method comprising:
a first operation of continuously supplying an electrode plate having a first coated portion and a second coated portion coated with an active material slurry and an uncoated portion between the first coated portion and the second coated portion and supplying a label;
a second operation of applying the supplied label to the uncoated portion;
a third operation of pressing the first coated portion and the second coated portion of the electrode plate in which the label is applied to the uncoated portion together with the label; and
a fourth operation of removing the label from the uncoated portion of the pressed electrode plate.

9. The method as claimed in claim 8, further comprising a fifth operation of rewinding the separated label.

10. The method as claimed in claim 8 or claim 9, wherein the second operation further includes an alignment detection operation of detecting alignment of the label attached to the uncoated portion with the uncoated portion.

11. The method as claimed in any one of claims 8 to 10, wherein the second operation includes applying the label to the uncoated portion while maintaining a first gap set between the first coated portion and one end of the label and a second gap set between the second coated portion and the other end of the label, provided in opposite sides in a width direction of the electrode plate.

12. The method as claimed in any one of claims 8 to 11, wherein the first coated portion and the second coated portion are formed in a stripe type along a length direction of the electrode plate on the electrode plate with the uncoated portion interposed therebetween, and the second operation includes applying the label in a stripe type along the length direction of the electrode plate, and optionally wherein the fourth operation includes continuously removing the label along the length direction of the electrode plate.

13. The method as claimed in any one of claims 8 to 11, wherein the first coated portion and the second coated portion are formed in a pattern type along a width direction of the electrode plate on the electrode plate, with the uncoated portion interposed therebetween, and the second operation includes applying the label in a pattern type along the width direction of the electrode plate, and optionally wherein the fourth operation includes removing the label intermittently along the width direction of the electrode plate.

14. An electrode plate of a rechargeable battery, the electrode plate comprising:
a first coated portion and a second coated portion in which an electrode plate is coated with an active material slurry; and
an uncoated portion set by an exposure of the electrode plate between the first coated portion and the second coated portion,
wherein the uncoated portion is removed after pressing the first coated portion and the second coated portion with the label attached to form wrinkles, and
the wrinkles are formed on each of opposite sides of a width W of the uncoated portion set in the width direction of the electrode plate within a maximum range of 0.05 W.

15. The electrode plate as claimed in claim 14, wherein if the width of the uncoated portion is 60 mm, the wrinkles are formed within a maximum range of 3 mm on each of the opposite sides in the width direction, and optionally wherein either or both a maximum of three wrinkles are formed within a unit area of 10*10 mm² set in the width direction and the length direction that intersect each other on the opposite sides in the width direction, and/or the wrinkles are formed within the unit area with a maximum length of 10 mm.

16. The electrode plate as claimed in claim 14 or claim 15, wherein the first coated portion, the uncoated portion and the second coated portion are formed in a stripe type or a pattern type.
